(19) Europäisches Patentamt / European Patent Office / Office européen des brevets

(11) **EP 3 161 099 B1**

(12) **EUROPEAN PATENT SPECIFICATION**

(45) Date of publication and mention
of the grant of the patent:
**27.01.2021 Bulletin 2021/04**

(21) Application number: **15732232.2**

(22) Date of filing: **25.06.2015**

(51) Int Cl.:
**C09K 5/06** *(2006.01)*    **C09K 5/14** *(2006.01)*

(86) International application number:
**PCT/EP2015/064449**

(87) International publication number:
**WO 2015/197788 (30.12.2015 Gazette 2015/52)**

(54) **HYGROSCOPIC COMPOSITE MATERIAL**

HYGROSKOPISCHES VERBUNDMATERIAL

MATÉRIAU COMPOSITE HYGROSCOPIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **25.06.2014 GB 201411286
03.10.2014 GB 201417530**

(43) Date of publication of application:
**03.05.2017 Bulletin 2017/18**

(73) Proprietors:
• **Université de Mons
7000 Mons (BE)**
• **Université Libre de Bruxelles
1050 Bruxelles (BE)**

(72) Inventors:
• **COURBON, Emilie
B-7000 Mons (BE)**
• **FRERE, Marc
B-7000 Mons (BE)**
• **HEYMANS, Nicolas
B-7000 Mons (BE)**
• **D'ANS, Pierre
B-1050 Bruxelles (BE)**

(74) Representative: **ARC-IP
ARC-IP sprl
Rue Emile Francqui 4
1435 Mont-Saint-Guibert (BE)**

(56) References cited:
**CN-A- 102 211 016       JP-A- S5 840 496
US-A- 5 585 174          US-A1- 2006 101 997
US-A1- 2012 264 600      US-A1- 2013 270 476**

• **WU ET AL: "Effects of impregnating variables on
dynamic sorption characteristics and storage
properties of composite sorbent for solar heat
storage", SOLAR ENERGY, PERGAMON PRESS.
OXFORD, GB, vol. 81, no. 7, 26 June 2007
(2007-06-26), pages 864-871, XP022131859, ISSN:
0038-092X, DOI:
10.1016/J.SOLENER.2006.11.013**
• **ARISTOV YU I ET AL: "Kinetics of water sorption
on SWS-1L (calcium chloride confined to
mesoporous silica gel): Influence of grain size
and temperature", CHEMICAL ENGINEERING
SCIENCE, OXFORD, GB, vol. 61, no. 5, 1 March
2006 (2006-03-01), pages 1453-1458,
XP025012046, ISSN: 0009-2509, DOI:
10.1016/J.CES.2005.08.033 [retrieved on
2006-03-01]**

**Description**

The present invention relates to a composite material comprising a hygroscopic salt arranged within a porous material and to the use of such a material for energy storage.

US2012/264600 discloses a composite adsorbent material comprising a porous host material of activated carbon impregnated with silica-gel and calcium chloride. CN102211016 discloses a composite moisture absorption material based on carbon base and calcium chloride. US5585174 heat-accumulating material an open-porosity substance and a hygroscopic substance capable of reversible dehydration-hydration processes. Other examples are disclosed in WU ET AL: "Effects of impregnating variables on dynamic sorption characteristics and storage properties of composite sorbent for solar heat storage", SOLAR ENERGY, vol. 81, no. 7, 26 June 2007, pages 864-871, and in ARISTOV YU I ET AL: "Kinetics of water sorption on SWS-1L (calcium chloride confined to mesoporous silica gel): influence of grain size and temperature", CHEMICAL ENGINEERING SCIENCE, vol. 61, no. 5, 1 March 2006, pages 1453-1458.

According to one of its aspects, the present invention provides a composite material as defined in claim 1. Additional aspects are defined in other independent claims. The dependent claims define preferred and/or alternative embodiments.

The composite materials of one aspect of the invention are particularly suited for long term storage of energy, notably during a period of one to nine months. One application is for storage of thermal energy produced, for example by solar collectors, during the summer and subsequent controlled release of this energy to heat a building during the winter. The system may be used to store energy prior to its subsequent release for a period of at least 168 hours (about one week), at least 672 hours (about four weeks), at least 2016 hours (about 12 weeks) or at least 4032 hours (about 24 weeks).

During energy collection, heating of a hydrated form of the hygroscopic salt leads to its dehydration and water vapour generated may be condensed and stored in a tank. For energy release, contacting a dehydrated form of the hygroscopic salt with water vapour releases hydration energy in the form of heat which may be transferred using a carrier gas. During a dehydration/hydration cycle the salt is likely to be subject to morphological changes (for example, partial liquefaction or aggregation of salt particles) which may affect the reliability of the storage system. Incorporating the salt in a porous material mitigates associated problems and facilitates contact between the salt and its surrounding atmosphere.

The porous material preferably acts to support the hygroscopic salt and/or acts as a physical adsorbent for water vapour. The hygroscopic salt is preferably dispersed substantially homogeneously in the porous material but without completely filling the porosity; this allows a large amount of salt to be supported whilst facilitating accessibility for exchange of water vapour between the salt and its surrounding atmosphere.

The form of grains facilities incorporation of the material in an energy storage system and provides a large surface area which also facilitates contact between the composite material and its surrounding atmosphere. The grains may have an average diameter of at least $50\mu m$ and/or less than 3mm.

The average pore diameter of the porous material may be at least 1 nm or 2 nm; it may be less than or equal to 30nm or 15 nm. The total pore volume of the porous material may be at least 0.2 $cm^3$/g or 0.3 $cm^3$/g and/or less than or equal to 2$cm^3$/g or 1.5$cm^3$/g. The active surface area may range from 200 to 800$m^2$/g, preferably from 300 to 550$m^2$/g or from 1000 to 1500$m^2$/g, preferably from 1200 to 1300$m^2$/g.

The pairings of porous material and hygroscopic salt of certain aspects of the invention have been found particularly suitable for achieving desirable levels of water adsorption and/or desorption and/or for allowing desirable quantities of hygroscopic salt to be carried by the composite materials.

In particular, it has surprisingly been found that a significant quantity of the salt can be introduced and/or retained at or towards the central zone of the grains. Whilst not wishing to be bound by theory, it is believed that this aspect contributes to providing high levels of water adsorption, notably by allowing the interior of the grains (and not just their surface portions) to carry significant quantities of the salt whilst allowing access to the salt at the interior of the grain for adsorption and desorption of water vapour. It is also thought that preventing the formation of a layer of salt and/or blocked pores at the surface of the grains which would restrict access to the interior of the grains enhances performance of the composite material.

Where the water adsorption is expressed in g/g this represents grams of water adsorbed per gram of dehydrated composite material. The water adsorption is an indication of the amount of water that a dehydrated form of the composite material can adsorb. The amount of energy released is a function of the amount of water adsorbed and the hydration energy of the hygroscopic salt(s) present in the composite material.

The water adsorption may be:

| pairing of porous material and hygroscopic salt | water adsorption measured between 80°C and 30°C at 12.5mbar | water adsorption measured between 80°C and 30°C at 20mbar |
|---|---|---|
| activated carbon and strontium bromide | at least 0.19g/g, preferably at least 0.20g/g | at least 0.19g/g, preferably at least 0.20g/g |
| activated carbon and calcium chloride | at least 0.28g/g, preferably at least 0.29g/g | At least 0.44g/g, preferably at least 0.45g/g, |
| silicagel and calcium chloride | at least 0.35 g/g, preferably at least 0.36g/g, more preferably at least 0.38g/g | At least 0.60g/g, more preferably at least 0.62g/g, more preferably at least 0.64g/g |
| silicagel and strontium bromide | at least 0.18g/g, preferably at least 0.20g/g, more preferably at least 0.21g/g | at least 0.25g/g, preferably at least 0.26g/g, more preferably at least 0.28g/g |
| silicagel and magnesium chloride | at least 0.25g/g, preferably at least 0.26g/g, more preferably at least 0.28g/g | at least 0.35 g/g, more preferably at least 0.37g/g, more preferably at least 0.39g/g |

Water adsorption of the composite material may be measured by thermogravimetry with adsorption isotherms. The dehydrated composite material is placed inside a thermogravimetry apparatus, for example a Seratam TG-DSC 111. Isotherms are measured by pressure stages and water vapour is thereafter incorporated in the composite material. The isotherms are generally measured from 100Pa to 1800Pa. Beyond this partial pressure, water vapour generally condenses inside the apparatus and the results may be erroneous. The measurements are preferably made at 30°C, 40°C, 60°C and 80°C. In most applications the water adsorption is measured between 30°C and 80°C at the saturated vapour pressure at 10°C.

The hygroscopic salt may be trapped in the microporosity and/or the mesoporosity of the porous material; this may enhance the stability of the salt. Preferably, the pores of the porous material are not completely filled by the hygroscopic salt. This may facilitate accessibility of the salt within the porous material and/or allow the porous material to take part to the energy storage process by adsorbing and desorbing water vapour. The amount of hygroscopic salt of the composite material with respect to the total pore volume of the porous material may be no more than 95%, no more than 90%, no more than 85%, preferably no more than 80%.

The amount of hygroscopic salt of the composite material with respect to the total weight of the composite material may be:

- At least 20%wt, preferably at least 25%wt, more preferably at least 29%wt for the pairing activated carbon and strontium bromide
- At least 28%wt, preferably at least 30%wt, more preferably at least 32%wt for the pairing activated carbon and calcium chloride
- At least 33%wt, preferably at least 35%wt, more preferably at least 38%wt for the pairing silicagel and calcium chloride
- At least 40%wt, preferably at least 45%wt, more preferably at least 47%wt for the pairing silicagel and strontium bromide
- At least 30%, preferably at least 35%, more preferably at least 38% for the pairing silicagel and magnesium chloride

The amount of hygroscopic salt of the composite material with respect to the total weight of the composite material may be determined by measuring the difference in weight between the porous material prior to impregnation and the impregnated composite material. Alternatively, the hygroscopic salt content can be measured by X-Ray Fluorescence or by other chemical analysis.

The water adsorption/desorption performance of the composite material preferably remains substantially constant over a plurality of cycles. This allows use of the composite materials in systems adapted to function over a large number of cycles and/or over a long duration, for example over a period of at least 5, 10 or 15 years. The difference in water adsorption of the composite material measured between 30°C and 80°C at 12.5mbar between 5 successive cycles of adsorption and subsequent desorption, and preferably between 15 such cycles, may be less than 15%, preferably less 10%, more preferably less than 5%. This may be measured for the first 5 or 15 cycles of a previously unused composite material.

A preferred method of manufacturing a composite material comprises

- Impregnating a porous material with a solution of a hygroscopic salt to form a composite material;

- Subsequently drying the composite material in order to remove water;
- Subsequently re-impregnating the composite material with a solution of a hygroscopic salt to form a composite material.

Preferably, the porous material is dried to remove water prior to the first impregnation. Additional steps of drying and subsequently re-impregnating the composite material may be used such that the method comprises a three step process (i.e. three impregnation steps, each impregnation step being separated by a drying step), a four step, five step, six step, seven step or eight step process, or a process comprising more than eight steps.

The solution of hygroscopic salt is preferably an aqueous solution. The concentration of the hygroscopic salt in the aqueous solution is preferably less than the saturation concentration of the hygroscopic salt, notably a concentration of not more than 95% or 90% of the saturation concentration; this reduces the risk of excessive deposition of the salt at the surface portion of the porous material and/or blocking access of the interior pores of the porous material for subsequent impregnations.

Drying of the porous or composite material may comprise heating in an oven, for example at 200°C. The mass of the porous or composite material may be measured periodically during drying; absence of a change of mass between two successive measurements may be taken as in indication that the material is substantially dehydrated. The drying duration may be about at least 4 hours, notably prior to the initial impregnation; it may be about at least 2 hours, notably between subsequent impregnations. The drying duration depends on the amount of composite material to be prepared.

During impregnation, the aqueous solution of the hygroscopic salt may be added to a recipient containing the dehydrated porous material. The volume of the aqueous solution is substantially equal to the pore volume of the porous material; this helps to avoid deposition of hygroscopic salt on the external surface of the porous material and facilitates deposition in the pores of the porous material by capillary condensation. Preferably, the recipient containing the aqueous solution of the hygroscopic salt and the porous material is mixed during the impregnation, for example by shaking or agitation; this helps the homogeneity of the impregnation.

The impregnation step may be at ambient temperature. The duration of the impregnation may be at least 15, 30, 45, 60 or 120 minutes and/or less than 8 or 4 hours.

Each impregnation may use the same concentration of solution of hygroscopic salt and/or the same hygroscopic salt.

The composite material may be used for the storage and the recuperation of thermal energy in heating system, for example a domestic heating system. In use, the at least partially hydrated composite material may be at least partially dehydrated by subjecting it to a temperature in the range 30°C to 150°C, preferably 40°C to 120°C, more preferably 60°C to 110°C, even more preferably 70°C to 100°C during a period of at least 10 minutes, 30 minutes or 45 minutes. The at least partially dehydrated composite material may be stored for a period of at least 30 minutes, at least 1 hour, at least 4 hours, preferably at least 4 days, more preferably at least 4 weeks, even more preferably at least 4 months prior to contact with water to release its hydration energy. The at least partially dehydrated composite material composite may be exposed to water, in vapour form, in order to rehydrate the composite material whilst removing the heat from the composite material at a temperature in the range 20°C to 80°C, preferably 20°C to 60°C, more preferably 30°C to 50°C.

Non limiting examples are described below with reference to:

Fig 1: a graph of water adsorption and desorption over successive cycles; and

Fig 2: a cross-section through a grain of composite material.

Examples 1-5

The composite materials of Table 1 were made by:

- Dehydrating the porous material in an oven at 200°C for 4h until the mass of the porous material was constant;
- Impregnating, with agitation, the dehydrated porous material during 30-60 minutes with a volume of an aqueous solution of the hygroscopic salt equal to the pore volume;
- Dehydrating the composite material in an oven for 60 minutes at 200°C (except for example 5 which was dehydrated at 110°C);
- Repeating the impregnation/drying cycle as indicated in Table 1

Table 1

| Example | Pairing | Concentration of hygroscopic salt in solution for the impregnation | Number of impregnation steps | Final amount of hygroscopic salt of the composite material in the grains with respect to the total weight of the grains | Water adsorption measured between 80°C and 30°C at 12.5mbar | Water adsorption measured between 80°C and 30°C at 20mbar |
|---|---|---|---|---|---|---|
| 1 | activated carbon /SrBr2 | 40% | 2 | 29.50 % | 0.200 | 0.200 |
| 2 | activated carbon /CaCl2 | 20% | 3 | 32.47 % | 0.292 | 0.450 |
| 3 | silicagel /CaCl2 | 20% | 4 | 42.92 % | 0.387 | 0.640 |
| 4 | silicagel /SrBr2 | 40% | 2 | 47.68 % | 0.218 | 0.285 |
| 5 | silicagel /MgCl2 | 20% | 2 | 36.00 % | 0.284 | 0.390 |

The activated carbon SRD 10034 (AC) used has a specific surface of 1250 $m^2$/g and a pore volume of 0.42 $cm^3$/g. The silicagel SG 100 (SG) used has a specific surface of 360 $m^2$/g and a porous volume of 0.8 $cm^3$/g. Another type of silicagel may be used such as the silicagel SG 62 (SG) which has a specific surface of 320 $m^2$/g and a porous volume of 1.15 $cm^3$/g.

Reproducibility test

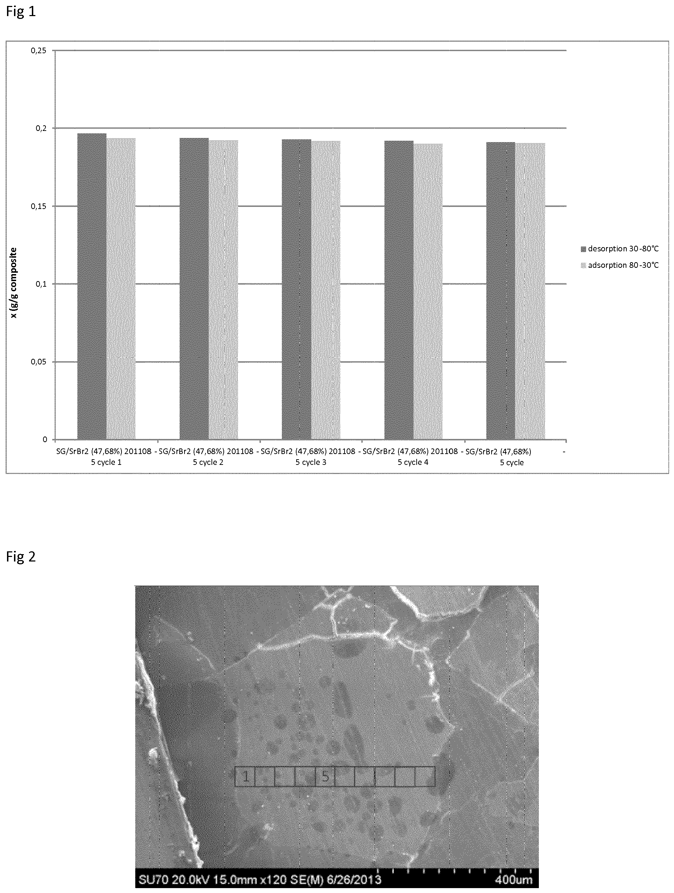

The composite material of Example 4 was tested during 5 successive adsorption/desorption cycles between 30° and 80°C at 12,5mbar. The results shown in Fig 1 were measured by a thermogravimeter TG-DSC 111 and show:

- a difference in water adsorption of the composite material between the first and last of 5 successive cycles of less than 5%.
- a difference between water adsorption and subsequent water desorption in each cycle of less than 5%.

This indicates suitability for domestic or other heating systems, for example non domestic heating systems.

Determination of the hygroscopic metal concentration at the peripheral and central zones

The impregnation of a grain of the composite material of Example 3 (silica gel with calcium chloride) was analysed using a scanning electron microscope and is shown in Fig 2.

Grains of the composite material were imprisoned in an inert resin or matrix. This was polished to provide a cross section through grains that could be analysed using an electron microscope. Chemical analysis was obtained using an EDX analyser provided with the scanning electron microscope.

During sample preparation and analysis it was ensured:

- that the planarity of the surface was sufficient to provide a quantitative chemical analysis;
- that the preparation technique did not bring any element that would interfere with chemical analyses (i.e. in the case of EDX, peaks should not overlap). For example, a conductive carbon layer should not be deposited before imaging if the composite contains activated carbon;
- that the composite material was not contaminated by any other mean, for example, the polishing media;
- that none of the elements to be measure was removed by the preparation technique (i.e., C or Si, O and Sr, Br or Ca, Cl or Mg, Cl).

Once the sample was imaged, it was verified that no "crust" of salt was present on the outer areas of the cross section. Such a crust would imply an interface between an imperfectly impregnated core and an outer area. A check using EDX can be done in case of doubt. On Fig. 2, no such phenomenon can be observed.

An analysis zone was defined across the width of a grain as an inscribed rectangle with at least three corners in contact with the grain periphery. The length of the analysis zone should be at least 1/10 of the diameter of the grain and the ratio length/width should be equal to 10. Preferably, the analysis zone passes through the centre of the grain. The analysis zone was then divided into ten identical juxtaposed squares numbered sequentially from 1 to 10, as shown in Fig. 2.

Square 1 (at the periphery of the grain) defines the peripheral zone and square 5 towards the centre of the grain defines the central zone at which the concentrations were determined. Table 2 gives the elements analysed (any other element was excluded from the analysis) and the condition used to verify a "good quality of impregnation":

Table 2

| Pairing | Elements analyses | Impregnation is of good quality if: |
|---|---|---|
| activated carbon and strontium bromide | C, Sr, Br | $\left(\frac{[Sr]}{[C]}\right)_5 \geq 0.7\left(\frac{[Sr]}{[C]}\right)_1$ |
| activated carbon and calcium chloride | C, Ca, Cl | $\left(\frac{[Ca]}{[C]}\right)_5 \geq 0.7\left(\frac{[Ca]}{[C]}\right)_1$ |
| silicagel and calcium chloride | Si, O, Ca, Cl | $\left(\frac{[Ca]}{[Si]}\right)_5 \geq 0.7\left(\frac{[Ca]}{[Si]}\right)_1$ |
| silicagel and strontium bromide | Si, O, Sr, Br | $\left(\frac{[Sr]}{[Si]}\right)_5 \geq 0.7\left(\frac{[Sr]}{[Si]}\right)_1$ |
| Silicagel and magnesium chloride | Si, O, Mg, Cl | $\left(\frac{[Mg]}{[Si]}\right)_5 \geq 0.7\left(\frac{[Mg]}{[Si]}\right)_1$ |

In Table 2, [x] denotes the mass percentage of element x and the indices "1" and "5" denote measurements performed on squares 1 and 5 respectively.

The mass percentages of Ca, Cl, Si and O were measured. On square 1, [Ca]/[Si] = 0.3255 and on square 5, [Ca]/[Si] = 0.6307.

Preferably, the measurement is repeated on a plurality of grains and the average is taken.

Thus, in this example the central zone hygroscopic metal concentration was 1.94 times the times the peripheral zone hygroscopic metal concentration (HMCc = 1.94 HMCp); this satisfies the condition HMCc $\geq$ 0.7 HMCp.

**Claims**

1. A composite material comprising grains, the grains comprising at least one of the following pairings of a hygroscopic salt arranged within a porous material and having the following water adsorption and/or amount of hygroscopic salt:

| pairing of porous material and hygroscopic salt | water adsorption measured between 80°C and 30°C at 12.5mbar | amount of hygroscopic salt of the composite material in the grains with respect to the total weight of the grains, notably determined by X-ray fluorescence |
|---|---|---|
| activated carbon and strontium bromide | at least 0.19g/g | at least 29% wt |
| activated carbon and calcium chloride | at least 0.28g/g | at least 32% wt |
| silicagel and calcium chloride | at least 0.35 g/g | at least 38% wt |

(continued)

| pairing of porous material and hygroscopic salt | water adsorption measured between 80°C and 30°C at 12.5mbar | amount of hygroscopic salt of the composite material in the grains with respect to the total weight of the grains, notably determined by X-ray fluorescence |
|---|---|---|
| silicagel and strontium bromide | at least 0.18g/g | at least 47% wt |
| silicagel and magnesium chloride | at least 0.25g/g | at least 31% wt |

wherein the grains have a peripheral zone and a central zone, the peripheral zone of a grain being a portion of the grain extending from a periphery of the grain towards the centre of the grain for a distance of about $1/10^{th}$ of the diameter of the grain, and the central zone of a grain being a portion of the grain extending from the centre of the grain for a distance of about $1/10^{th}$ of the diameter of the grain towards the periphery of the grain;

wherein the peripheral zone has a peripheral zone hygroscopic metal concentration $HMCp$ expressed as the mass percentage of metal(s) of the hygroscopic salt(s) at the peripheral zone $HMp$ divided by the mass percentage of i) the carbon of the activated carbon or ii) the silicon of the silica gel at the peripheral zone $HPp$ (i.e. $HMCp = HMp/HPp$)

wherein the central zone has a central zone hygroscopic metal concentration $HMCc$ expressed as the mass percentage of metal(s) of the hygroscopic salt(s) at the central zone $HMc$ divided by the mass percentage of i) the carbon of the activated carbon or ii) the silicon of the silica gel at the central zone $HPc$ (i.e. $HMCc = HMc/HPc$)

and wherein the central zone hygroscopic metal concentration is greater than or equal to 0.7 times the peripheral zone hygroscopic metal concentration ($HMCc \geq 0.7\ HMCp$).

2. A composite material in accordance with claim 1, wherein the water adsorption of the composite material measured between 80°C and 30°C at 20mbar is:

- at least 0.19g/g for the pairing activated carbon and strontium bromide
- at least 0.44g/g for the pairing activated carbon and calcium chloride
- at least 0.25 g/g for the pairing silicagel and strontium bromide
- at least 0.60g/g for the pairing silicagel and calcium chloride
- at least 0.35g/g for the pairing silicagel and magnesium chloride

3. A composite material in accordance with any preceding claim, wherein the central zone hygroscopic metal concentration is greater than or equal to 0.8 times the peripheral zone hygroscopic metal concentration ($HMCc \geq 0.8\ HMCp$).

4. A composite material in accordance with any precedent claim, wherein the amount of hygroscopic salt of the composite material in the grains with respect to the total pore volume of the porous material in the grains is no more than 90%.

5. A composite material, notably in accordance with any preceding claim, comprising a pairing of a porous material and a hygroscopic salt arranged within the porous material, selected from the pairings of:

- activated carbon and strontium bromide
- activated carbon and calcium chloride
- silicagel and calcium chloride
- silicagel and strontium bromide
- silicagel and magnesium chloride

wherein the difference in water adsorption of the composite material measured between 80°C and 30°C at 12.5mbar or at 20mbar between 5 successive cycles, preferably between 15 successive cycles, is less than 10%, preferably less than 5%.

6. A method of manufacturing a composite material comprising a pairing of a porous material and a hygroscopic salt arranged within the porous material, notably in accordance with any preceding claim, comprising:

Impregnating a porous material with a solution of a hygroscopic salt to form a composite material;

Subsequently drying the composite material in order to remove water;

Subsequently re-impregnating the composite material with a solution of a hygroscopic salt to form a composite material; and

wherein the volume of the solution, in each impregnating step, is substantially equal to the pore volume of the porous material.

7. A method in accordance with claim 6, comprising at least three impregnations each separated by a drying of the composite material.

8. A method in accordance with claim 6 or claim 7, wherein the pairing of the hygroscopic salt and the porous material is selected from the pairings:

- activated carbon and strontium bromide
- activated carbon and calcium chloride
- silicagel and calcium chloride
- silicagel and strontium bromide
- silicagel and magnesium chloride.

9. A method in accordance with any of claims 6 to 8, wherein the method does not comprise washing the composite material between impregnations.

10. A method in accordance with any of claims 6 to 9, wherein the amount of hygroscopic salt of the impregnated composite material with respect to the total weight of the impregnated composite material is at least 25% wt, preferably at least 35% wt.

11. A method in accordance with any of claims 6 to 10, wherein the concentration of the hygroscopic salt in the solution is less than the saturation concentration of the hygroscopic salt, notably a concentration of not more than 95% or 90% of the saturation concentration.

12. A method of storage and recuperation of thermal energy comprising:

a) at least partially dehydrating a hydrated form of i) a composite material in accordance with any of claims 1 to 6 or ii) a composite material manufactured by a method in accordance with any of claims 7 to 11 by subjecting the composite material to a temperature in the range 30° C to 150° C for a period of at least 30 minutes;

b) Subsequently storing the at least partially dehydrated composite material for a period of at least 4 hours;

c) Subsequently exposing the at least partially dehydrated composite material to water to at least partially re-hydrate the composite material whilst removing heat from the composite material at a temperature in the range 20° C to 80 °C.

13. A method in accordance with claim 12, wherein:

a) at least partially dehydrating the composite material comprises subjecting the composite material to a temperature in the range 70° C to 100 °C for a period of least 30 minutes; and

b) at least partially hydrating the composite material comprises removing heat at a temperature in the range 30° C to 80° C.

14. A domestic heating system comprising:

a) a composite material in accordance with any of claims 1 to 6 or ii) a composite material manufactured by a method in accordance with any of claims 7 to 11;

b) a system for at least partially dehydrating the composite material by subjecting the composite material to a temperature in the range 30° C to 150° C for a period of at least 30 minutes;

c) a system for storing the at least partially dehydrated composite material for a period of at least 4 hours;

d) a system for exposing the at least partially dehydrated composite material to water to at least partially re-hydrate the composite material whilst removing heat from the composite material at a temperature in the range 20° C to 80 °C.

15. A heating system in accordance with claim 14, in which the heating system is adapted to store at least 2000 kWh of energy for a duration of at least 3360 hours (about 140 weeks).

**Patentansprüche**

1. Kompositmaterial, umfassend Körner, wobei die Körner mindestens eines der folgenden Paare eines hygroskopischen Salzes angeordnet in einem porösen Material umfassen und die folgende Wasseradsorption und/oder Menge an hygroskopischem Salz aufweisen:

| Paar von porösem Material und hygroskopischem Salz | Wasseradsorption, gemessen zwischen 80°C und 30°C bei 12,5 mbar | Menge an hygroskopischem Salz des Kompositmaterials in den Körnern bezüglich des Gesamtgewichts der Körner, besonders bestimmt durch Röntgenfluoreszenz |
|---|---|---|
| Aktivkohle und Strontiumbromid | mindestens 0,19 g/g | mindestens 29 Gew.-% |
| Aktivkohle und Calciumchlorid | mindestens 0,28 g/g | mindestens 32 Gew.-% |
| Silicagel und Calciumchlorid | mindestens 0,35 g/g | mindestens 38 Gew.-% |
| Silicagel und Strontiumbromid | mindestens 0,18 g/g | mindestens 47 Gew.-% |
| Silicagel und Magnesiumchlorid | mindestens 0,25 g/g | mindestens 31 Gew.-% |

wobei die Körner eine periphere Zone und eine Mittenzone aufweisen, wobei die periphere Zone eines Korns ein Abschnitt des Korns ist, welcher sich von einer Peripherie des Korns zu der Mitte des Korns über einen Abstand von etwa 1/10 des Durchmessers des Korns erstreckt, und die Mittenzone eines Korns ein Abschnitt des Korns ist, welcher sich von der Mitte des Korns über einen Abstand von etwa 1/10 des Durchmessers des Korns zu der Peripherie des Korns erstreckt,
wobei die periphere Zone eine Konzentration an hygroskopischem Metall bezüglich der peripheren Zone HMCp, ausgedrückt als der Massenprozentanteil an Metall(en) des bzw. der hygroskopischen Salz(es) an der peripheren Zone HMp dividiert durch den Massenprozentanteil von i) des Kohlenstoffs der Aktivkohle oder ii) des Siliciums des Silicagels an der peripheren Zone HPp (d.h. HMCp=HMp/HPp), aufweist,
wobei die Mittenzone eine Konzentration an hygroskopischem Metall bezüglich der Mittenzone HMCc, ausgedrückt als der Massenprozentanteil an Metall(en) des bzw. der hygroskopischen Salz(es) an der Mittenzone HMc dividiert durch den Massenprozentanteil von i) des Kohlenstoffs der Aktivkohle oder ii) des Silicums des Silicagels an der Mittenzone HPc (d.h. HMCc=HMc/HPc), aufweist,
und wobei die Konzentration an hygroskopischem Metall bezüglich der Mittenzone größer ist als oder gleich dem 0,7-fachen der Konzentration an hygroskopischem Metall bezüglich der peripheren Zone (HMCc $\geq$ 0,7 HMCp) ist.

2. Kompositmaterial gemäß Anspruch 1, wobei die Wasseradsorption des Kompositmaterials, gemessen zwischen 80°C und 30°C bei 20mbar, ist:

   - mindestens 0,19 g/g für das Paar Aktivkohle und Strontiumbromid
   - mindestens 0,44 g/g für das Paar Aktivkohle und Calciumchlorid
   - mindestens 0,25 g/g für das Paar Silicagel und Strontiumbromid
   - mindestens 0,60 g/g für das Paar Silicagel und Calciumchlorid
   - mindestens 0,35 g/g für das Paar Siligel und Magnesiumchlorid.

3. Kompostimaterial gemäß einem der vorhergehenden Anspruch, wobei die Konzentration an hygroskopischem Metall bezüglich der Mittenzone größer ist oder gleich dem 0,8-fachen der Konzentration an hygroskopischem Metall bezüglich der peripheren Zone (HMCc $\geq$ 0,8 HMCp) ist.

4. Kompositmaterial gemäß einem vorhergehenden Anspruch, wobei die Menge an hygroskopischem Salz des Kompositmaterials in den Körnern bezüglich dem Gesamtporenvolumen des porösen Materials in den Körnern nicht mehr als 90% ist.

5. Kompositmaterial, insbesondere gemäß einem vorhergehenden Anspruch, umfassend ein Paar von einem porösen Material und einem hygroskopischen Salz angeordnet in dem porösen Material, ausgewählt aus den Paaren:

- Aktivkohle und Strontiumbromid
- Aktivkohle und Calciumchlorid
- Silicagel und Calciumchlorid
- Silicagel und Strontiumbromid
- Silicagel und Magnesiumchlorid

wobei der Unterschied in der Wasseradsorption des Kompositmaterials, gemessen zwischen 80°C und 30°C bei 12,5 mbar oder bei 20 mbar zwischen 5 nacheinander folgenden Zyklen, vorzugsweise zwischen 15 nacheinander folgenden Zyklen, weniger als 10%, vorzugsweise weniger als 5%, ist.

6. Verfahren zur Herstellung eines Kompositmaterials, umfassend ein Paar eines porösen Materials und eines hygroskopischen Salzes angeordnet in dem porösen Material, insbesondere gemäß einem vorhergehenden Anspruch, umfassend:

Imprägnieren eines porösen Materials mit einer Lösung eines hygroskopischen Salzes unter Bildung eines Kompositmaterials,
nachfolgendes Trocknen des Kompositmaterials, um Wasser zu entfernen,
nachfolgendes Re-Imprägnieren des Kompositmaterials mit einer Lösung eines hygroskopischen Salzes unter Bildung eines Kompositmaterials, und
wobei das Volumen der Lösung in jedem Imprägnierungsschritt im Wesentlichen gleich dem Porenvolumen des porösen Materials ist.

7. Verfahren gemäß Anspruch 6, umfassend mindestens drei Imprägnierungen jeweils getrennt durch ein Trocknen des Kompositmaterials.

8. Verfahren gemäß Anspruch 6 oder Anspruch 7, wobei das Paar des hygroskopischen Salzes und des porösen Materials ausgewählt ist aus den Paaren:

- Aktivkohle und Strontiumbromid
- Aktivkohle und Calciumchlorid
- Silicagel und Calciumchlorid
- Silicagel und Strontiumbromid
- Silicagel und Magnesiumchlorid.

9. Verfahren gemäß einem der Ansprüche 6 bis 8, wobei das Verfahren nicht Waschen des Kompositmaterials zwischen Imprägnierungen umfaßt.

10. Verfahren gemäß einem der Ansprüche 6 bis 9, wobei die Menge an hygroskopischem Salz des imprägnierten Kompositmaterials bezüglich des Gesamtgewichts des imprägnierten Kompositmaterials mindestens 25 Gew.-%, vorzugsweise mindestens 35 Gew.-%, beträgt.

11. Verfahren gemäß einem der Ansprüche 6 bis 10, wobei die Konzentration des hygroskopischen Salzes in der Lösung weniger als die Sättigungskonzentration des hygroskopischen Salzes ist, insbesondere eine Konzentration von nicht mehr als 95% oder 90% der Sättigungskonzentration.

12. Verfahren zur Lagerung und Rekuperation von thermischer Energie, umfassend:

a) mindestens teilweises Entwässern einer hydratisierten Form von i) einem Kompositmaterial gemäß einem der Ansprüche 1 bis 6 oder ii) einem Kompositmaterial, hergestellt durch ein Verfahren gemäß einem der Ansprüche 7 bis 11, durch Unterwerfen des Kompositmaterials einer Temperatur im Bereich von 30°C bis 150°C für eine Zeitdauer von mindestens 30 Minuten,
b) nachfolgendes Lagern des mindestens teilweise dehydratisierten Kompositmaterials für eine Zeitdauer von mindestens 4 Stunden,

c) nachfolgendes Aussetzen des mindestens teilweise dehydratisierten Kompositmaterials Wasser, um mindestens teilweise das Kompositmaterial zu re-hydratisieren, während Wärme von dem Kompositmaterials bei einer Temperatur in dem Bereich von 20°C bis 80°C abgezogen wird.

**13.** Verfahren gemäß Anspruch 12, wobei:

a) mindestens teilweises Dehydratisieren des Kompositmaterials das Unterwerfen des Kompositmaterials einer Temperatur in dem Bereich von 70°C bis 100°C für eine Zeitdauer von mindestens 30 Minuten umfaßt, und
b) mindestens teilweises Hydratisieren des Kompositmaterials das Abziehen von Wärme bei einer Temperatur in dem Bereich von 30°C bis 80°C umfaßt.

**14.** Häusliches Heizsystem, umfassend:

a) ein Kompositmaterials gemäß einem der Ansprüche 1 bis 6 oder ii) ein Kompositmaterial, hergestellt durch ein Verfahren gemäß einem der Ansprüche 7 bis 11,
b) ein System zum mindestens teilweisen Dehydratisieren des Kompositmaterials durch Unterwerfung des Kompositmaterials einer Temperatur in dem Bereich von 30°C bis 150°C für eine Zeitdauer von mindestens 30 Minuten,
c) ein System zum Speichern des mindestens teilweise dehydratisierten Kompositmaterials für eine Zeitdauer von mindestens vier Stunden,
d) ein System zum Aussetzen des mindestens teilweise dehydratisierten Kompositmaterials Wasser, um mindestens teilweise das Kompositmaterial zu re-hydratisieren, während Wärme von dem Kompositmaterial bei einer Temperatur in dem Bereich von 20°C bis 80°C abgezogen wird.

**15.** Wärmesystem gemäß Anspruch 14, worin das Wärmesystem eingerichtet ist, mindestens 2000 kWh Energie für eine Zeitdauer von mindestens 3360 Stunden (etwa 140 Wochen) zu speichern.

**Revendications**

**1.** Matériau composite comprenant des grains, les grains comprenant au moins l'un des appariements suivants d'un sel hygroscopique disposé à l'intérieur d'une matière poreuse et présentant l'adsorption d'eau et/ou la quantité de sel hygroscopique suivante:

| Appariement de matière poreuse et de sel hygroscopique | Adsorption d'eau mesurée entre 80°C et 30°C à 12,5 mbar | Quantité de sel hygroscopique de la matière composite dans les grains sur base du poids total des grains, notamment déterminé par fluorescence X |
| --- | --- | --- |
| charbon actif et bromure de strontium | Au moins 0,19 g/g | au moins 29% en poids |
| charbon actif et chlorure de calcium | au moins 0,28 g/g | au moins 32% en poids |
| Gel de silice et chlorure de calcium | au moins 0,35 g/g | au moins 38% en poids |
| Gel de silice et bromure de strontium | au moins 0,18 g/g | au moins 47% en poids |
| Gel de silice et chlorure de magnésium | au moins 0,25 g/g | au moins 31% en poids |

dans lequel les grains ont une zone périphérique et une zone centrale, la zone périphérique d'un grain étant une partie du grain s'étendant d'une périphérie du grain vers le centre du grain sur une distance d'environ 1/10e du diamètre du grain,
et la zone centrale d'un grain étant la partie du grain s'étendant du centre du grain sur une distance d'environ 1/10e du diamètre du grain vers la périphérie du grain;
dans lequel la zone périphérique possède une concentration de métal hygroscopique de zone périphérique HMCp exprimée en pour-cent en masse du/des métal/-aux du/des sel/s hygroscopique/s sur la zone périphérique HMp divisée par le pour-cent en masse de i) le charbon du charbon actif ou ii) le silicium du gel de silice sur la zone périphérique HPp (c'est-à-dire HMCp= HMp/ HPp),
dans lequel la zone centrale possède une concentration de métal hygroscopique de zone centrale HMCc exprimée en pour-cent en masse du/des métal/-aux du/des sel/s hygroscopique/s sur la zone centrale HMc divisée par le pour-cent en masse de i) le charbon du charbon actif ou ii) le silicium du gel de silice sur la zone centrale HPc (c'est-à-dire HMCc= HMc/ HPc)
et dans lequel la concentration du métal hygroscopique de zone centrale est plus grande ou égale à 0,7 fois la concentration de métal hygroscopique de zone périphérique (HMCc ≥ 0,7 HMCp).

2. Matériau composite selon la revendication 1, dans lequel l'adsorption d'eau du matériau composite mesurée entre 80°C et 30°C à 20 mbar est de:

   - au moins 0,19 g/g pour l'appariement du charbon actif et du bromure de strontium
   - au moins 0,44 g/g pour l'appariement du charbon actif et du chlorure de calcium
   - au moins 0,25 g/g pour l'appariement du gel de silice et du bromure de strontium
   - au moins 0,60 g/g pour l'appariement du gel de silice et du chlorure de calcium
   - au moins 0,35 g/g pour l'appariement du gel de silice et du chlorure de magnésium.

3. Matériau composite selon l'une quelconque revendication précédente, dans lequel la concentration de métal hygroscopique de zone centrale est plus grande ou égale à 0,8 fois la concentration de métal hygroscopique de zone périphérique (HMCc ≥ 0,8 HMCp).

4. Matériau composite selon l'une quelconque revendication précédente, dans lequel la quantité de sel hygroscopique du matériau composite dans les grains sur base du volume de pores total de la matière poreuse dans les grains ne fait pas plus que 90%.

5. Matériau composite, notamment selon l'une quelconque revendication précédente, comprenant un appariement d'une matière poreuse et d'un sel hygroscopique disposé à l'intérieur de la matière poreuse, sélectionné parmi l'appariement des suivants:

   - charbon actif et bromure de strontium
   - charbon actif et chlorure de calcium
   - gel de silice et chlorure de calcium
   - gel de silice et bromure de strontium
   - gel de silice et chlorure de magnésium

   dans lequel la différence en adsorption d'eau du matériau composite mesurée entre 80°C et 30°C à 12,5 mbar ou à 20 mbar entre 5 cycles successifs, de préférence entre 15 cycles successifs, est inférieure à 10%, de préférence inférieure à 5%.

6. Procédé de fabrication d'un matériau composite comprenant l'appariement d'une matière poreuse et d'un sel hygroscopique disposé à l'intérieur de la matière poreuse, notamment selon l'une quelconque revendication précédente, comprenant:

   l'imprégnation d'une matière poreuse avec une solution d'un sel hygroscopique pour former un matériau composite;
   ensuite séchage du matériau composite pour éliminer l'eau;
   ensuite réimprégnation du matériau composite avec une solution d'un sel hygroscopique pour former un matériau composite; et
   dans lequel le volume de la solution, à chaque étape d'imprégnation, est substantiellement égale au volume de pore de la matière poreuse.

7. Procédé selon la revendication 6, comprenant au moins trois imprégnations, chacune séparée par un séchage du matériau composite.

8. Procédé selon la revendication 6 ou la revendication 7, dans lequel l'appariement du sel hygroscopique et de la matière poreuse est sélectionné parmi les appariements suivants:

- charbon actif et bromure de strontium
- charbon actif et chlorure de calcium
- gel de silice et chlorure de calcium
- gel de silice et bromure de strontium
- gel de silice et chlorure de magnésium.

9. Procédé selon l'une quelconque des revendications 6 à 8, dans lequel le procédé ne comprend pas de lavage du matériau composite entre les imprégnations.

10. Procédé selon l'une quelconque des revendications 6 à 9, dans lequel la quantité de sel hygroscopique du matériau composite imprégné sur base du poids total du matériau composite imprégné est d'au moins 25% en poids, de préférence d'au moins 35% en poids.

11. Procédé selon l'une quelconque des revendications 6 à 10, dans lequel la concentration de sel hygroscopique dans la solution est inférieure à la concentration de saturation du sel hygroscopique, notamment une concentration de pas plus de 95% ou de 90% de la concentration de saturation.

12. Procédé de stockage et de récupération d'énergie thermique comprenant:

a) la déshydratation au moins partielle d'une forme hydratée de i) un matériau composite selon l'une quelconque des revendications 1 à 6 ou ii) d'un matériau composite fabriqué par un procédé selon l'une quelconque des revendications 7 à 11 en soumettant le matériau composite à une température dans l'intervalle compris entre 30°C et 150°C pendant une période d'au moins 30 minutes;
b) ensuite stockage du matériau composite au moins partiellement déshydraté pendant une période d'au moins 4 heures;
c) ensuite exposition du matériau composite au moins partiellement déshydraté à l'eau pour au moins partiellement hydrater le matériau composite tout en enlevant de la chaleur du matériau composite à une température dans l'intervalle compris entre 20°C et 80°C.

13. Procédé selon la revendication 12, dans lequel:

a) la déshydratation au moins partielle du matériau composite comprend soumettre le matériau composite à une température dans l'intervalle compris entre 70°C et 100°C pendant une période d'au moins 30 minutes; et
b) l'hydratation au moins partielle du matériau composite comprend enlever de la chaleur à une température dans l'intervalle compris entre 30°C et 80°C.

14. Système de chauffage domestique comprenant:

a) un matériau composite selon l'une quelconque des revendications 1 à 6 ou ii) un matériau composite fabriqué par un procédé selon l'une quelconque des revendications 7 à 11;
b) un système pour au moins partiellement déshydrater le matériau composite en soumettant le matériau composite à une température dans l'intervalle compris entre 30°C et 150°C pendant une période d'au moins 30 minutes;
c) un système pour stocker le matériau composite au moins partiellement déshydraté pendant une période d'au moins 4 heures;
d) un système pour exposer le matériau composite au moins partiellement déshydraté à de l'eau pour au moins partiellement hydrater le matériau composite tout en enlevant de la chaleur du matériau composite à une température dans l'intervalle compris entre 20°C et 80°C.

15. Système de chauffage selon la revendication 14, dans lequel le système de chauffage est propre à stocker au moins 2000 kWh d'énergie pour une durée d'au moins 3360 heures (environ 140 semaines).

Fig 1

Fig 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2012264600 A
- CN 102211016
- US 5585174 A

**Non-patent literature cited in the description**

- **WU et al.** Effects of impregnating variables on dynamic sorption characteristics and storage properties of composite sorbent for solar heat storage. *SOLAR ENERGY,* 26 June 2007, vol. 81 (7), 864-871
- **ARISTOV YU I et al.** Kinetics of water sorption on SWS-1L (calcium chloride confined to mesoporous silica gel): influence of grain size and temperature. *CHEMICAL ENGINEERING SCIENCE,* 01 March 2006, vol. 61, 1453-1458